(19)

Europäisches Patentamt

European Patent Office

Office européen des brevets

(11) **EP 3 933 584 A1**

(12) **EUROPEAN PATENT APPLICATION**

(43) Date of publication:
**05.01.2022 Bulletin 2022/01**

(21) Application number: **20183264.9**

(22) Date of filing: **30.06.2020**

(51) Int Cl.:
*G06F 9/50* (2006.01)          *G06F 11/30* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• **EIDENBENZ, Raphael**
**8049 Zürich (CH)**
• **PIGNOLET, Yvonne-Anne**
**8005 Zürich (CH)**

• **VUKOVIC, Ognjen**
**8953 Dietikon (CH)**
• **MOGA, Alexandru**
**8800 Thalwil (CH)**
• **KOZHAYA, David**
**8953 Dietikon (CH)**
• **BIRKE, Robert**
**8802 Kilchberg (CH)**
• **KANDE, Mallikarjun**
**Solon, OH Ohio 44139 (US)**

(74) Representative: **Zimmermann & Partner**
**Patentanwälte mbB**
**Postfach 330 920**
**80069 München (DE)**

(54) **APPLICATION MODELLING AND RESOURCE MANAGEMENT IN FOG NETWORKS**

(57)      A method for allocating fog applications in a fog network with a plurality of fog nodes is suggested. The method comprises: - providing an application model; - providing a fog network image that reflects the properties of the fog network; - performing a resource usage test of the application model on the fog network image, and receiving resource requirements for the fog network; - creating a concrete application model based on the application model, wherein the concrete application model contains the received resource requirements; and - performing allocation of the concrete application model on one or more of the fog nodes of the fog network.

Fig. 1

EP 3 933 584 A1

## Description

Field of the Invention

The present disclosure generally relates to fog computing networks, and in particular, to application modelling in fog networks which are implemented on an automation system.

Background of the Invention

The emergence of the Internet of Things (IoT) is extending the availability of network computing and resources to a wide range of devices and systems that have previously been excluded from data networking environments. Devices that has been working separately from each other and have been programmed manually can now work together and interact with each other. Complex system include a plurality of devices and work together as an automation system which reacts and interacts with its environment.

A goal of doing so is to enable higher levels of automation by enabling machines of various complexity and purposes to communicate without reliance on human intervention and/or interaction through manually programming of machines via interfaces. The majority of devices, sensors, and actuators (the "things") that will be network-enabled in this manner will typically be included in much larger systems providing new forms of automation. Industrial automation systems become "smarter" and fog computing may help to increase engineering efficiency.

Fog computing helps enable these larger systems by moving the computation, networking and storage capabilities of the centralized cloud closer to the machines and devices. Given the projected scale of such systems, the demand for fog node resources is expected to be high.

Previously available cloud solutions (e.g., computing and storage) have a number of drawbacks and limitations that preclude previously available cloud solutions from satisfying the performance demands of IoT applications. For example, previously available cloud solutions provide insufficient performance in the areas of: satisfying low latency thresholds; supporting for highly mobile endpoint devices; and providing real-time data analytics and decision making.

Fog computing networks (or fog networks or fog environments) are being developed as a solution to satisfy the performance demands of IoT applications. Fog networks provide computing and storage resources closer to the edge of networks, as opposed to the remote and centralized clustering of previously available cloud solutions. Endpoint client devices and near-user endpoint devices of fog networks are configured to collaboratively service client applications at the edge of a network close to the things seeking resources.

An industrial fog environment enables easy deployment of fog applications on spare resources of the networking and compute devices, so-called fog nodes, of an industrial automation system. To ensure that the application components, so-called foglets, have sufficient resources available to fulfill their functions, resources are reserved for them based on declared estimated resource usage model during hardware sizing. Typically, these resource requirement values are overestimated in order to avoid situations of starvation in harsh environments. As a result, resources are underutilized.

Allocation of applications in a fog network need to be calculated based on a model. Usually, application models are manually adapted if the fog network changes or if the application is used on the network for the first time. A fog network enables running distributed applications on the devices of the underlying automation system. One key feature of fog computing is that deployment, updating and removal of applications shall require minimal manual effort.

Accordingly, there is a need to improve resource management, allocation of applications and automation in fog networks.

Brief Summary of the Invention

A method for allocating fog applications in a fog network with a plurality of fog nodes is suggested. The method comprises: - providing an application model; - providing a fog network image that reflects the properties of the fog network; - performing a resource usage test of the application model on the fog network image, and receiving resource requirements for the fog network; - creating a concrete application model based on the application model, wherein the concrete application model contains the received resource requirements; and - performing allocation of the concrete application model on one or more of the fog nodes of the fog network.

A method for allocating fog applications in a fog network with a plurality of fog nodes is suggested. The method comprises: - providing a generic application model with a list of foglet templates, wherein the foglet templates comprise a specification of how to deploy and execute one or more foglets, and requirements for the host of a foglet, and / or desired observability for a foglet, which indicates how widely the foglet instances should be spread across the system; - providing an automation system with a plurality of devices on which a fog network with a plurality of fog nodes is implemented; - creating a concrete application model based on the generic application model, the automation system and on the fog network, wherein the concrete application model comprises a list of foglets and for at least one foglet a fog node requirement to the host foglet and / or for a plurality of foglets a maximum spread across fog nodes; - performing allocation of the foglets of the concrete application model on one or more of the fog nodes of the fog network, wherein the fog nodes fulfill the fog node requirement of the corresponding foglet and / or wherein the spread across the fog nodes is less than the maximum spread across fog nodes.

A method for managing resource capacities of a fog network, wherein the fog network is implemented on an automation system comprising a plurality of automation devices, wherein one or more devices of the plurality of automation devices operate a fog node, the method comprising: - providing one or more fog agents, wherein each fog agent is a software operating on one automation device, wherein each fog agent retrieves information about available resource capacities of the corresponding automation device; and - managing, by the fog agent, the access of one or more fog nodes to resource capacities of the corresponding automation device based on the retrieved information of the fog agent.

The present disclosure also suggests a fog network with a plurality of fog nodes, wherein the fog network is configured to perform the various embodiments of the methods as described herein. An automation system is also suggested, wherein the automation system comprises a plurality of computational devices, wherein the computational devices host a fog network configured to perform the various embodiments of the methods described herein.

Those skilled in the art will recognise additional features and advantages upon reading the following detailed description, and upon viewing the accompanying drawings.

Brief Description of the Drawings

Figure 1 illustrates an example of an automation system with a plurality of devices. A fog network is hosted by the devices.

Figure 2 illustrates an example of a flowchart of a method for allocating an application model according to the present disclosure.

Figure 3 illustrates another example of a flowchart of a method for allocating an application model according to the present disclosure.

Figure 4 illustrates an example of a method for managing resources of a fog network according to the present disclosure.

Detailed Description of the Invention

In the following detailed description, reference is made to the accompanying drawings, which form a part hereof, and in which are shown by way of illustration specific embodiments of the invention.

As used herein, the terms "having", "containing", "including", "comprising" and the like are open ended terms that indicate the presence of stated elements or features, but do not preclude additional elements or features.

It is to be understood that other embodiments may be utilised, and structural or logical changes may be made without departing from the scope of the present invention. The following detailed description, therefore, is not to be taken in a limiting sense, and the scope of the present invention is defined by the appended claims. The embodiments described herein use specific language, which should not be construed as limiting the scope of the appended claims. Each embodiment and each aspect so defined may be combined with any other embodiment or with any other aspect unless clearly indicated to the contrary.

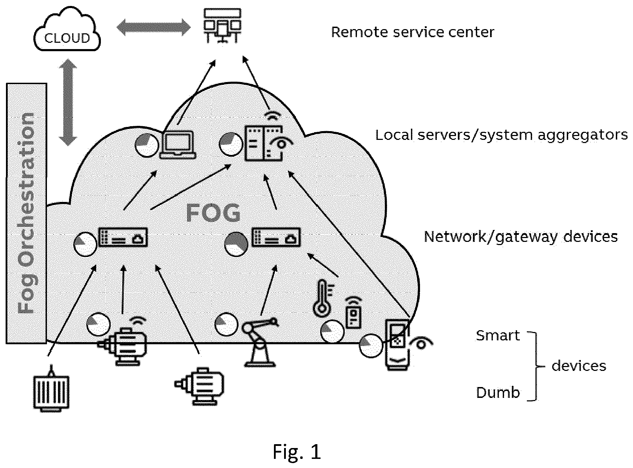

Fig. 1 shows an exemplary embodiment of a distributed control system (DCS) implemented on a plurality of devices. The DCS in Fig. 1 is a fog network. Fog computing is also known as edge computing or fogging. Fog computing facilitates the operation of compute, storage, and networking services between end devices and cloud computing data centers. Some prior art documents describe differences between fog computing and edge computing. However, the present application does not distinguish between the concept of fog computing and edge computing and considers both to be identical at least in the concept of the present invention. Accordingly, any reference to fog computing may be a reference to edge computing, any reference to a fog application may be a reference to an edge application and so on.

The physical system can be an automation system. Any system which interacts with its environment via, for example, sensors or actuators, is considered to be an automation system. Automation systems can comprise a huge number of heterogeneous devices. The devices are sometimes referred as the "things" and the concept of the things being connected with each other and communicating with each other is also referred as the "internet of things".

Fig. 1 shows a plurality of devices which can form an automation system. A fog network, an optional remote service center and a cloud is shown. The fog network may be connected to a cloud. The cloud can provide additional computational resource capacities like memory or CPU capacity. The generated data of the devices can be gathered and transferred to the cloud, where it is analyzed. While the cloud offers ease of scalability the approach of pushing more and more computation from the automation systems into the cloud has limits, and may often not be technically feasible or economically. Huge data transfers generate problems with latency thresholds, available bandwidth and delayed real-time reactions of the automation system.

Devices can have computational resource capacities, for example a CPU capacity, a memory capacity, and/or a bandwidth capacity. The resource capacities of some devices is exemplary illustrated in Fig. 1 showing a pie chart corresponding the device, wherein the full resource capacity is the full circle, free resource capacity is the unfilled part of the circle and the resource capacity in use is the filled part of the circle.

Some devices are considered as "smart" devices and some devices are considered as "dumb" devices. Smart devices may host a fog node and/or may provide resource capacities. Some examples for smart devices are industry 4.0 devices, automation machines, robot systems, user interfaces, network devices, routers, switches, gateway devices, servers, and comparable devices. Some devices may not host a fog node or may only have very simple tasks like "read-only" devices or "zero resource capacity" devices. These "dumb" devices, however, can still interact with the fog network although they do not provide resource capacities for other tasks than their primary functions, for example simple sensors, simple actuators or other comparable devices.

Fig. 1 shows a simple example of an automation system for illustrative propose with a small number of devices. However, other automation system may include a much higher number of devices. The automation system can be a factory or an industrial site in general including any number of devices. Devices of the automation system may be heterogeneous and may provide different resource capacities.

The fog network comprises a plurality of fog nodes. The fog network in Fig. 1 is a network of fog nodes, which reside on a number of devices anywhere between the field of devices and the cloud. The fog nodes offer the execution environment for the fog runtime and the foglets. The fog runtime is an administrative application configured to validate foglets.

Moreover, the fog network contains the software allocated and executed on the various components to manage the fog network, and to achieve the functionality as described in the following. The fog network can deploy and run potentially distributed fog applications. Based on an application model, it can decide which application part - so called foglet - should be deployed on which fog node. Thereby it allocates application parts (foglets) so as to adhere to given constraints and to optimize one or multiple objectives as per requirements of the application, as further explained below. Furthermore, the fog network can be able to incorporate fog nodes in a cloud, but it shall not depend on a cloud.

Fog nodes are implemented on devices. A device can host one or more fog nodes. If fog applications run on devices that are shared with non-fog applications, the fog applications shall not interfere with those applications (the so called primary function). Accordingly, a fog node may use a predetermined maximum resource capacity of the hosting device. However, the maximum resource capacity may also be variable in some examples. A fog node may be hosted parallel to the primary functionality of the device. In some embodiments, fog nodes can be hosted on a virtual machine (VM) on the device.

The "fog orchestration" shown in Fig. 1 is a conceptional illustration of basic software components which may be included in the fog network and may run on one or more fog nodes. The software components may include:

A Fog Monitor, which retrieves information on fog nodes and deployed fog applications. The resulting model of the fog network and application allocation may be provided to one or both of the Fog Controller and the Fog Manager;

A Fog Controller including a Fog Allocator, which calculates a mapping of the application's parts (foglets) to fog nodes so that data transfer is minimized. It then deploys the calculated mapping and foglets;

A Fog Manager, which may provide a user interface for selection and configuration of fog applications, allowing a user to deploy/update/remove applications, displays information on fog network and deployed applications. The Fog Manager triggers the according functionality of the Fog Controller upon deploy/update/remove requests by the user.

According to an aspect of the present disclosure, a foglet is a unit of deployment, execution and management in the fog network. Fog applications in general consist of a set of foglets that together form an added value functionality. In other words, a foglet is an application component. A foglet refers to a particular functionality, for example, a module, of an application and how to deploy and execute it, for example, the foglet configuration. Such an application module is the building block for a fog application.

Allocation of foglets may use an allocation algorithm which computes an allocation of foglets to fog nodes based on a concrete application model. The algorithm can for example implement a heuristic or exact linear program solution that targets specific optimization goals, e.g. the minimization of data transfers across network links. Based on models of the application and the fog network onto which the application should be deployed, an allocation algorithm (allocator) computes a mapping of application parts (foglets) to fog nodes. The allocation algorithm thereby can have multiple optimization objectives, for example, it shall minimize the needed network bandwidth, minimize latencies, satisfy network bandwidth constraints and constraints on latencies of data flows, and fulfill specific requirements if indicated in the application model.

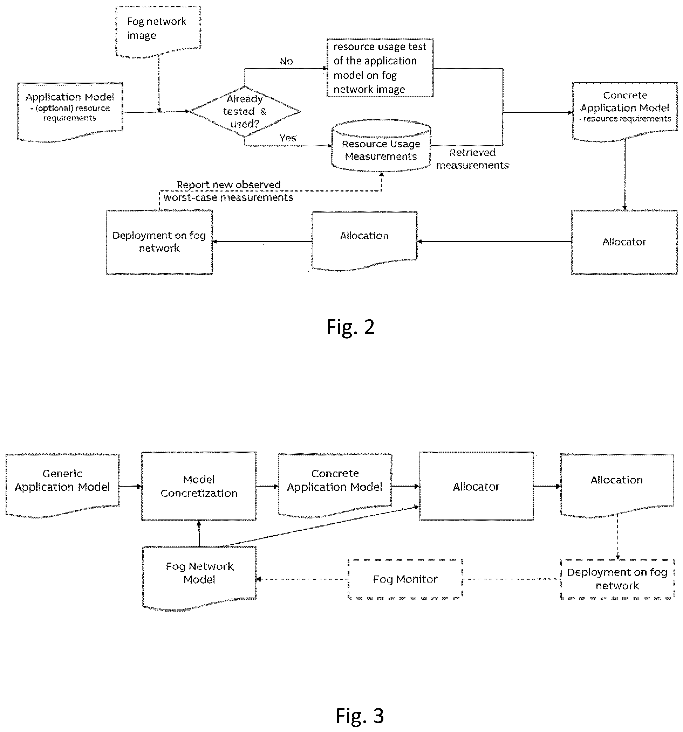

According to an embodiment, a method for allocating fog applications in a fog network with a plurality of fog nodes is suggested, the method comprising: - providing an application model; - providing a fog network image that reflects the properties of the fog network; - performing a resource usage test of the application model on the fog network image, and receiving resource requirements for the fog network; - creating a concrete application model based on the application model, wherein the concrete application model contains the received resource requirements; - performing allocation of the concrete application model on one or more of the fog nodes of the fog network. One example of the method is shown in Fig. 2.

The method describes the creation of a concrete application model which can be used to allocate application's foglets to fog nodes (or devices, respectively) of the fog network in a (near) optimal fashion. According to an aspect, allocating includes assigning a foglet to one or more fog nodes and deploying the foglet to the one or more fog nodes. In Fig. 2, deploying the foglet is illustrated separately.

Most distributed control systems (DCS), especially fog networks hosted by automation systems, vary from each other, in terms of devices, number of devices, configuration, and/or network topology. Fog applications can be adapted/configured according to the present disclosure so as to run (better) on a given fog network.

Applications are provided as application models. The application model can be a generic application model which describes the application independently of a given fog network. The generic application model comprises information that is needed to derive a concrete application model for a given fog network. The concrete application model contains resource requirements based on a usage test which will be explained later in detail. The application model can also already include resource requirements for the fog network, which means that the application model does not need to be tested as also explained later.

To ensure that the foglets have sufficient resources available to fulfill their functions, resources are reserved for them based on declared estimated resource usage model during hardware sizing. In the prior art, an application model for a given fog network had to be programmed manually. To ensure that fog nodes are not overloaded, resource requirements had been set or estimated manually based on generic hardware information. Typically, these resource requirement values had been overestimated in order to avoid situations of starvation in harsh environments. As a result, resources had been underutilized. The disclosed method replaces the manual estimation by the resource usage test. The present disclosure suggests a method which improve the estimation of resource requirements for foglets.

A fog network image is provided that reflects the properties of the fog network. According an aspect, resource requirements for the fog network are received by performing a resource usage test of the application model on the fog network image. The fog network image reflects the concrete environment of the present fog network. The fog network image can be, for example, the fog network (itself), a physical or digital twin of the fog network or an otherwise simulated version of the fog network.

According to aspect, the resource requirements of an application model or of foglets are the resources needed to fulfill the functions of the application or foglets. The resource requirements may comprise one of a CPU load, a memory usage, a bandwidth or combinations thereof.

Specifically, the resource requirements may be the maximum resource requirements for each foglet, which refers to the maximum consumption of the (worst-case) configuration that entails the largest maximum of resources, for example, the maximum resources at a point in time or during a period of time. This ensures that a fog node is not overloaded and free resources are used. The resource requirements are not estimated just by the given hardware but by testing during the resource usage test of the application model on the fog network image.

Specifically, if system safety allows, the resource usage test might be done on the actual "live" system, in other cases, a physical or digital twin of the deployed system shall be used to provide the context of the target fog network. The resource usage testing and model derivation can be implemented by using a representative test suite, or by using relevant historical system data about the target system. The measurements of CPU load, memory usage etc. can be done with standard tools, such as Linux' "top", Docker stats, Kubernetes, Kubernetes Metrics API, depending on the specific platforms underlying the fog. Resource requirements can, for example, be indicated in MIPS (Million instructions per second) for CPU usage, bytes for memory requirements.

According to an aspect, the concrete application model comprises one or more foglets, wherein the resource requirements comprise one of a CPU load, a memory usage, a bandwidth or combinations thereof for each foglet of the concrete application model.

The method may further comprise: - receiving a current resource status of the fog notes. The allocation may be based additionally on the received current resource status of the fog notes. The current resource status can include a free resource capacity. A foglet may be allocated and deployed on a fog node if the resource requirement is identical or less than the free resource capacity.

As exemplary illustrated in Fig. 2, the method can comprise: - monitoring the resource consumption of the application on the fog nodes of the fog network after the allocation of the concrete application model. In Fig. 2, the monitoring is illustrated as "Resource Usage Measurements", which retrieves worst-case measurements and may provide them to create an improved concrete application model. In a perfect system, the resource requirements would never be exceeded during execution of the application model. However, the system may change, for example, devices may be changed or may operate worse over time. Accordingly, the method may comprise: - reporting the new monitored worst-case measurements.

The monitored resource consumption may comprise one of a CPU load, a memory usage, a bandwidth or combinations thereof.

The method may further comprise: - comparing the monitored resource consumption with the received resource requirements of the concrete application model. If the actual monitored resource consumption (new observed worst-case measurements) exceeds the resource requirements of the concrete application model, improving the application model may be necessary. The method may further comprise: - creating an improved concrete application model based on the concrete application model and the monitored resource consumption, if the monitored resource consumption exceeds the received resource requirements.

The improved concrete application model can specifically be used if the same application is continuously allocated in the fog network or if another application of the same kind has to be allocated in the fog network. The method may comprise: - performing allocation of the improved concrete application model on one or more of the fog nodes of the fog network. Specifically, allocating a foglet may include re-locating a foglet from one fog node to another.

Fig. 2 further illustrates that application models may not be tested in the usage test, if the test has already been done with the application model. The resource usage test can be seen as an initial test to find resource requirements and the monitoring of the resource consumption can be seen as a continuously monitoring and improvement cycle. The method may further comprise: - determine if a concrete application model is already known for the provided application and the fog network; and - decide to:

if a concrete application model is already known for the provided application model and the fog network:

- perform allocation of the concrete application model on one or more of the fog nodes of the fog network; or

if a concrete application model is not known for the fog network:

- performing a resource usage test of the application on the fog network image, and receive resource requirements for the fog network; creating a concrete application model based on the application model, wherein the concrete application model contains the received resource requirements; performing allocation of the concrete application model on one or more of the fog nodes of the fog network.

In other words, once the resource requirements are known for the application model, execution of the application model is started, and the lifecycle of the application model is managed. Application management includes monitoring and adapting in case of fog node or device failures.

The method may also comprise: - updating the fog network image, if the fog network is changed. The fog network image should reflect the current state of the fog network. It should incorporate information about the devices on which the fog network runs and other applications running in the fog network. To ensure consistency between the image and the fog network, the fog nodes and hosted application parts (or the resources used by them respectively) shall be monitored; and the fog network image shall be updated on any change.

The present disclosure also suggests a fog network with a plurality of fog nodes, wherein the fog network is configured to perform the method as described herein. An automation system is also suggested, wherein the automation system comprises a plurality of computational devices, wherein the computational devices host a fog network configured to perform the method as described herein.

Fig. 3 illustrates an exemplary flow chart diagram of a method according to the present disclosure. The method for allocating fog applications in a fog network with a plurality of fog nodes comprises: - providing a generic application model with a list of foglet templates, wherein the foglet templates comprise a specification of how to deploy and execute one or more foglets, and requirements for the host of a foglet, and / or desired observability for a foglet, which indicates how widely the foglet instances should be spread across the system; - providing an automation system with a plurality of devices on which a fog network with a plurality of fog nodes is implemented; - creating a concrete application model based on the generic application model, the automation system and on the fog network, wherein the concrete application model comprises a list of foglets and for at least one foglet a fog node requirement to host foglet and / or for a plurality of foglets a maximum spread across fog nodes; - performing allocation of the foglets of the concrete application model on one or more of the fog nodes of the fog network, wherein the fog nodes fulfil the fog node requirement of the corresponding foglet and / or wherein spread across the fog nodes is less than the maximum spread across fog nodes.

Creating the concrete application model is based on the generic application model, the automation system and on the fog network. The status of the fog network can be retrieved by the Fog Monitor as shown in Fig. 3. The Fog Monitor creates a resulting model of the fog network which is used for model concretization and for allocation. Accordingly, creating the concrete application model can be based on a model of the fog network created by the Fog Manager.

The foglet template comprises a specification of how to deploy and execute one or more foglets. In some examples, foglet templates can be represented by a container image, to be downloaded to a fog node from a container repository. A container instance is a foglet instance, or simply foglet, interchangeably. In general, a foglet template may result in multiple foglets which may be executed across one or more fog nodes.

The method improves automation by providing a generic application model which is independent from the particular fog network. The application model is then automatically transformed to a concrete application model, once the information about the target fog network is available.

The generic application model contains information that is needed to derive a concrete model such as a list of foglet templates. The foglet templates may comprise requirements for the host of a foglet and / or desired observability for a foglet, which indicates how widely the foglet instances should be spread across the site. Requirements for the host of a foglet can be hardware requirements, for example, the availability of a specific sensor (temperature, pressure, moisture, distance), a specific actuator, a Bluetooth module, and / or a minimum resource requirement. Resource requirements may comprise one of a CPU load, a memory usage, a bandwidth or combinations thereof.

Creating a concrete application model may be additionally based on up-to-date information about the automation system and the fog network, specifically about the number of fog nodes, the hardware configurations of the hosting devices of the fog nodes, resource capacities of the fog nodes and/ or combinations thereof.

The the generic application model contains requirements which are specific for the system and the fog network. Based on the up-to-date information of the current fog network, specifically, the features provided by each fog node, and resource capacities on fog nodes, the model concretization calculates the concrete number of foglets for each foglet template. The up-to-date information of the current fog network may be monitored by the Fog Monitor. Accordingly, the fog network of the method may be characterized as the "up-to-date fog network".

In one example, the concrete number of foglets for each foglet template may be determined during model concretization as the largest value of x that fulfills the following inequality:

$$x_{\min} \leq x \leq x^*$$

where $x^*$ is the desired number of foglets, and $x_{min}$ is the minimum acceptable number of foglets. Both $x^*$ and $x_{min}$ depend on the provided features and available resources on each fog node, and are derived using the current fog network.

The foglet template cannot be allocated. The foglet in the concrete application model can be allocated to a fog node. According to an aspect, a foglet can only be allocated to a single fog node. However, a fog node can execute multiple foglets at the same time.

According to an aspect, the generic application model can be provided via a cloud server. As an advantage, generic application models can be provided to a plurality of different automation systems with different fog networks. Following the method disclosed herein, the generic application models are automatically transformed into concrete application models of the specific fog networks. This reduces manual effort to a minimum. New applications can be rolled out easily in multiple factories comprising automation systems without manual adaptation for each individual factory.

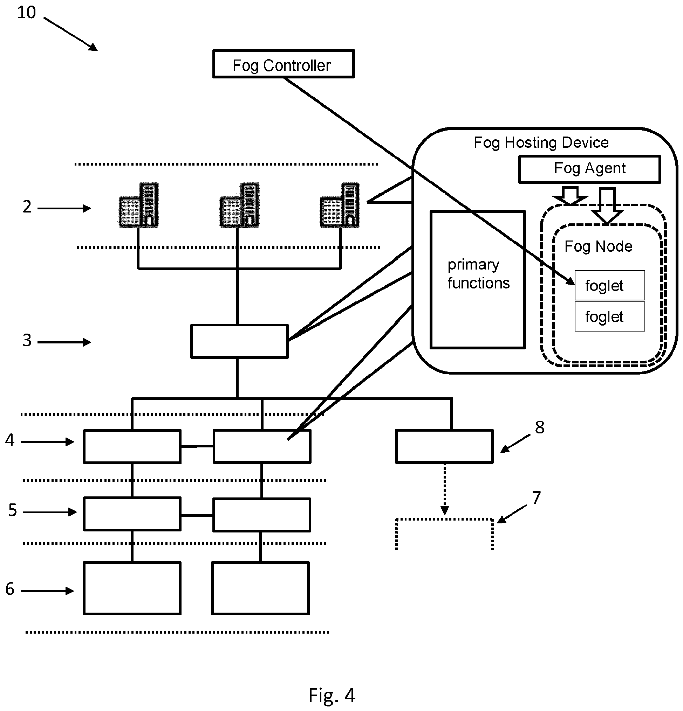

Fig. 4 shows another aspect of the present disclosure. A method for managing resource capacities of a fog network is suggested, wherein the fog network is implemented on an automation system comprising a plurality of automation devices, wherein one or more devices of the plurality of automation devices operate a fog node. The method comprises: - providing one or more fog agents, wherein the fog agent is a software operating on one of the automation devices, wherein the fog agent retrieves information about available resources capacities of the corresponding automation device; - providing a fog node hosted by the same automation device; - managing, by the fog agent, the access of the fog node to resource capacities of the automation device based on the retrieved information. Available resource capacities can include, for example, CPU capacity and/or memory that the automation device can provide for the fog node.

Fig. 4 shows an example of a system in which the method can be performed. An automations system 10 is shown. The automation system 10 may include one or more servers 2, one or more gateways or managed switches 3, one or more controllers 4, sub controllers 5, sensors or actuators 6, managed switches 8, and further Ethernet devices 7. Some or all of these devices may host a fog node.

The fog hosting device is exemplary shown in the bubble of Fig. 4. In Fig. 4, the fog hosting device may be a server 10, a managed switch 3 or a controller 4. However, the fog hosting device can be any device of the fog network which can provide resource capacities for the fog network.

The fog hosting device executes a primary function and a fog node. Foglets can be executed by the fog node. The fog agent is an additional software which manages the access of the fog node to resource capacities of the automation device (fog hosting device). This is indicated by the dashed lines.

The fog agent retrieves information about available resources capacities of the corresponding automation device. Specifically, the fog agent may retrieve the resource requirement of the primary function of the corresponding automation device. Accordingly, the method may comprise, that the fog agent manages the access of the fog node to resource capacities of the automation device based on the retrieved information in that the access of the fog node to resource capacities is the full resource capacity of the device minus the resource requirement of the primary function of the corresponding automation device minus a predetermined buffer resource capacity. The predetermined buffer resource capacity may be, for example, between 0 and 10% of the full capacity.

## Claims

1.  A method for allocating fog applications in a fog network with a plurality of fog nodes, the method comprising:

    - providing an application model;
    - providing a fog network image that reflects the properties of the fog network;
    - performing a resource usage test of the application model on the fog network image, and receiving resource requirements for the fog network;
    - creating a concrete application model based on the application model, wherein the concrete application model contains the received resource requirements; and
    - performing allocation of the concrete application model on one or more of the fog nodes of the fog network.

2.  The method of claim 1, wherein the fog network image is the fog network, a physical or digital twin of the fog network or a otherwise simulated version of the fog network.

3.  The method of any of the preceding claims, wherein the resource requirements comprise one of a CPU load, a memory usage, a bandwidth or combinations thereof.

4.  The method of any of the preceding claims, wherein the concrete application model comprises one or more foglets and wherein the resource requirements comprise one of a CPU load, a memory usage, a bandwidth or combinations thereof for each foglet of the concrete application model.

5.  The method of any of the preceding claims, further comprising:

    - monitoring the resource consumption of the application on the fog nodes of the fog network after the allocation of the concrete application model.

6.  The method of claim 5, further comprising:

    - comparing the monitored resource consumption with the received resource requirements of the concrete application model.

7.  The method of claim 6, further comprising:

    - creating an improved concrete application model based on the concrete application model and the monitored resource consumption, if the monitored resource consumption exceeds the received resource requirements of the resource usage test; and
    - performing allocation of the improved concrete application model on one or more of the fog nodes of the fog network.

8.  The method of claim 7, further comprising:

    - determining if a concrete application model is already known for the provided application and the fog network; and
    - deciding to:

        if a concrete application model is already known for the provided application and the fog network:

        - perform allocation of the concrete application model on one or more of the fog nodes of the fog network; or

        if a concrete application model is not known for the fog network:

        - perform a resource usage test of the application on the fog network image, and receive resource requirements for the fog network,
        - create a concrete application model based on the application model, wherein the concrete application model contains the received resource requirements,
        - perform allocation of the concrete application model on one or more of the fog nodes of the fog network.

9.  The method of any of the claims 5 to 8, wherein the monitored resource consumption comprises one of a CPU load, a memory usage, a bandwidth or combinations thereof.

10. The method of any of the claims 5 to 9, wherein the concrete application model comprises one or more foglets and wherein the monitored resource consumption comprises one of a CPU load, a memory usage, a bandwidth or combinations thereof for each foglet of the concrete application model.

11. A fog network with a plurality of fog nodes, wherein the fog network is configured to perform the method of any of the preceding claims.

12. A method for allocating fog applications in a fog network with a plurality of fog nodes, the method comprising:

    - providing a generic application model with a list of foglet templates, wherein the foglet templates comprise a specification of how to deploy and execute one or more foglets, and requirements for the host of a foglet, and / or desired observability for a foglet, which indicates how widely the foglet instances should be spread across the system;
- providing an automation system with a plurality of devices on which a fog network with a plurality of fog nodes is implemented;
- creating a concrete application model based on the generic application model, the automation system and on the fog network, wherein the concrete application model comprises a list of foglets and for at least one foglet a fog node requirement to host foglet and / or for a plurality of foglets a maximum spread across fog nodes;
- performing allocation of the foglets of the concrete application model on one or more of the fog nodes of the fog network, wherein the fog nodes fulfil the fog node requirement of the corresponding foglet and / or wherein spread across the fog nodes is less than the maximum spread across fog nodes.

13. The method of claim 12, wherein the generic application model is provided via a cloud server.

14. A method for managing resource capacities of a fog network, wherein the fog network is implemented on an automation system comprising a plurality of automation devices, wherein one or more devices of the plurality of automation devices operate a fog node, the method comprising:

- providing one or more fog agents, wherein each fog agent is a software operating on one automation device, wherein each fog agent retrieves information about available resource capacities of the corresponding automation device;
- managing, by the fog agent, the access of one or more fog nodes to resource capacities of the corresponding automation device based on the retrieved information of the fog agent.

15. The method of claim 14, wherein the available resource capacities contains CPU capacity and/or memory that the automation device can provide for the fog node.

Fig. 1

Fig. 2

Fig. 3

10

Fog Controller

Fog Hosting Device

Fog Agent

2

primary
functions

Fog Node

foglet

foglet

3

4

8

5

7

6

Fig. 4

Europäisches Patentamt

European Patent Office

Office européen des brevets

# EUROPEAN SEARCH REPORT

Application Number

EP 20 18 3264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EIDENBENZ RAPHAEL ET AL: "Latency-Aware Industrial Fog Application Orchestration with Kubernetes", 2020 FIFTH INTERNATIONAL CONFERENCE ON FOG AND MOBILE EDGE COMPUTING (FMEC), IEEE, 20 April 2020 (2020-04-20), pages 164-171, XP033796730, DOI: 10.1109/FMEC49853.2020.9144934 [retrieved on 2020-07-20] * the whole document * | 1-15 | INV. G06F9/50 G06F11/30 |
| A | DANIEL MANIGLIA AMANCIO DA SILVA ET AL: "An Analysis of Fog Computing Data Placement Algorithms", ARXIV.ORG, CORNELL UNIVERSITY LIBRARY, 201 OLIN LIBRARY CORNELL UNIVERSITY ITHACA, NY 14853, 24 May 2020 (2020-05-24), XP081682883, * Section V.D * | 1-13 | |
| A | LOJA NANCY ET AL: "Performance Analysis of a CNN Counting Application for Fog and Cloud Computing", 2019 XLV LATIN AMERICAN COMPUTING CONFERENCE (CLEI), IEEE, 30 September 2019 (2019-09-30), pages 1-7, XP033760440, DOI: 10.1109/CLEI47609.2019.235099 [retrieved on 2020-04-20] * abstract * | 1-13 | TECHNICAL FIELDS SEARCHED (IPC) G06F |

The present search report has been drawn up for all claims

| Place of search | Date of completion of the search | Examiner |
|---|---|---|
| The Hague | 20 November 2020 | Touloupis, Emmanuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)